Europäisches Patentamt

(19) European Patent Office

Office européen des brevets

(11) Veröffentlichungsnummer: **0 123 837**
**B1**

(12) # EUROPÄISCHE PATENTSCHRIFT

(45) Veröffentlichungstag der Patentschrift:
20.11.86

(51) Int. Cl.⁴: **F 16 K 11/06,** F 16 K 39/04,
**F 15 B 13/04**

(21) Anmeldenummer: **84102618.0**

(22) Anmeldetag: **09.03.84**

(54) **Steuerventilvorrichtung.**

(30) Priorität: **10.03.83 DE 3308576**

(43) Veröffentlichungstag der Anmeldung:
**07.11.84 Patentblatt 84/45**

(45) Bekanntmachung des Hinweises auf die Patenterteilung:
**20.11.86 Patentblatt 86/47**

(84) Benannte Vertragsstaaten:
**AT BE CH DE FR GB IT LI LU NL SE**

(56) Entgegenhaltungen:
**DE - A - 2 152 830**
**DE - A - 2 252 772**
**DE - A - 2 910 029**
**DE - A - 3 000 591**
**FR - A - 1 191 267**

(73) Patentinhaber: **Heilmeier & Weinlein Fabrik für
Oel-Hydraulik GmbH & Co. KG, Neumarkter Strasse 26,
D-8000 München 80 (DE)**

(72) Erfinder: **Brunner, Rudolf, Wankstrasse 23,
D-8011 Baldham (DE)**

(74) Vertreter: **Patentanwälte Grünecker, Dr. Kinkeldey, Dr.
Stockmair, Dr. Schumann, Jakob, Dr. Bezold, Meister,
Hilgers, Dr. Meyer-Plath, Maximilianstrasse 58,
D-8000 München 22 (DE)**

### Beschreibung

Die Erfindung betrifft eine Steuerventilvorrichtung der im Oberbegriff des Patentanspruchs 1 angegebenen Art.

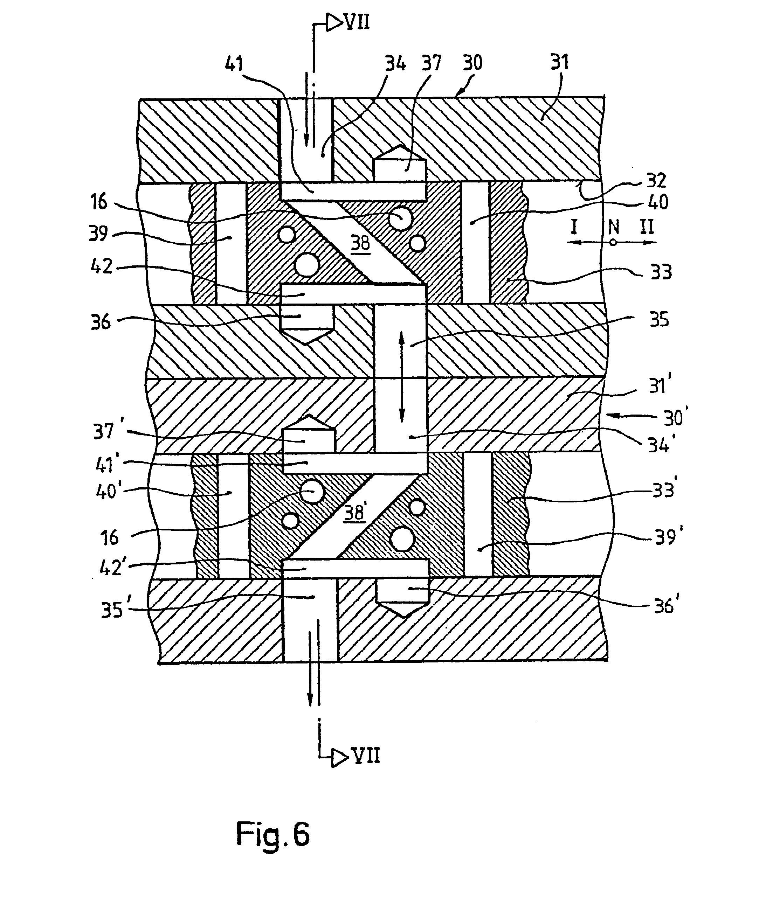

Bei einer aus der DE-A-2 152 830 bekannten Steuerventilvorrichtung dieser Art fluchtet der Druckkanal mit dem Ablaufkanal, so dass die Druckkanalmündung in die Gehäusebohrung der Ablaufkanalmündung diametral gegenüberliegt. Im Kolbenschieber ist eine Durchgangsbohrung vorgesehen, die in der Neutralstellung den Druckkanal geradlinig mit dem Ablaufkanal verbindet. Wenn der Kolbenschieber hingegen in eine Steuerstellung verschoben wird, sperrt er mit seinem Umfang die Verbindung zwischen dem Druckkanal und dem Ablaufkanal. Im Bereich der Mündung des Druckkanals steht dann das Druckmittel mit dem jeweiligen Arbeitsdruck an, während der Bereich der Ablaufkanalmündung drucklos ist. Daraus resultiert eine einseitige Anpressung des Kolbenschiebers in der Gehäusebohrung, die seiner feinfühligen Verstellbewegung abträglich ist. Bei kleineren Durchflussströmen und damit verhältnismässig kleinen Querschnitten für den drucklosen Durchlauf wird dieser Nachteil in Kauf genommen. Bei grösseren Durchflussströmen, z.B. 200 Liter/min oder mehr, werden die Durchflussquerschnitte für den drucklosen Durchlauf jedoch so gross, dass die sich aufgrund dieser höheren Querschnitte bei gesperrtem drucklosen Durchlauf ergebenden Kräfte zu hoch werden. Als Obergrenze für den Durchmesser der Strömungswege für den drucklosen Durchlauf haben sich in der Praxis 6,5 bis maximal 7,5 mm herausgestellt. Grössere Durchmesser, wie sie für grosse Durchflussströme benötigt werden, führen zu einer zu starken Verklemmung des Kolbenschiebers. Bei einer Ausführungsform der bekannten Steuerventilvorrichtung (Fig. 6) wird ein Druckausgleich für den Kolbenschieber dadurch angestrebt, dass der Druckkanal unterhalb der Mitte der Gehäusebohrung mit dem Ablaufkanal fluchtend in diese einmündet und über eine Durchgangsbohrung im Kolbenschieber mit dieser verbunden werden kann. Gleichzeitig wird im Gehäuse von der dem Druckkanal gegenüberliegenden Seite ein Verbindungskanal zur Gehäusebohrung geführt, der mit dem gleichen Druck beaufschlagt ist wie der Druckkanal selbst. Dieser die Gehäusebohrung umgebende Verbindungskanal fluchtet mit einem ebenfalls die Gehäusebohrung umgehenden Verbindungskanal zum Ablaufkanal, welcher mit dem Druck im Ablaufkanal beaufschlagt ist. Im Kolbenschieber ist eine weitere Durchgangsbohrung, und zwar in derselben axialen Ebene wie die Durchgangsbohrung zwischen dem Druckkanal und dem Ablaufkanal, vorgesehen, die bei drucklosem Durchlauf die beiden Verbindungskanäle miteinander verbindet. Der Druckmittelstrom wird beim drucklosen Durchlauf auf zwei Wege verteilt und durchströmt den Kolbenschieber in zwei einander entgegengesetzten Richtungen. In einer Steuerstellung des Kolbenschiebers, in der dieser den drucklosen Durchlauf absperrt, wird der Kolbenschieber von zwei Seiten mit Drücken beaufschlagt, wodurch die Gefahr einer Verklemmung verringert wird. Jedoch hat diese Lösung den gravierenden Nachteil, dass in den Verbindungskanälen der Strömungswiderstand für das Druckmittel erheblich grösser ist, als auf dem zweiten und gerade durchgehenden Weg. Bei drucklosem Durchlauf ist aber ein möglichst geringer Strömungswiderstand wichtig. Da die beiden Wege, die das Druckmittel in der Stellung des drucklosen Durchlaufes nimmt, stark differierende Strömungswiderstände haben, ergibt sich auch hier wiederum ein Ungleichgewicht, das zu einseitigen Belastungen des Kolbenschiebers führt. Dazu kommt, dass die beiden Durchgangsbohrungen im Kolbenschieber durch dessen Durchmesser in ihrer Grösse beschränkt sind und auf beiden Strömungswegen unzweckmässig hohe Strömungsverluste bedingen. Der grundlegende Vorteil dieser bekannten Steuerventilvorrichtung liegt darin, dass der drucklose Durchlauf im gleichen axialen Bereich des Kolbenschiebers verläuft, wie die Arbeitssteuerung des Druckmittels zu den Verbrauchern, was insgesamt zu kurzbauenden Kolbenschiebern und kurzbauenden Gehäusen führt, da keine eigene Ebene für den drucklosen Durchlauf benötigt wird, wenn dieser winkelversetzt zur Arbeitsebene des Steuerventils verläuft. Bei der Ausführungsform der bekannten Steuerventilvorrichtung mit den beiden Wegen des Druckmittels ist ein weiterer Nachteil dadurch gegeben, dass bei mehreren Steuerschiebern in ein und demselben Gehäuse, die über einen durchgehenden drucklosen Durchlauf verfügen, der angestrebte Druckausgleichseffekt dann verlorengeht, wenn beide Kolbenschieber betätigt werden, bzw. wenn bei einem bereits betätigten Kolbenschieber auch der zweite betätigt werden muss.

Das Problem des Druckausgleichs spielt bei solchen Steuerventilvorrichtungen keine Rolle (z.B. DE-A-2 252 772), bei denen das Druckmittel durch ringförmige Einstiche in der Gehäusebohrung und/oder im Kolbenschieber gesteuert wird, da dann der Druck über den gesamten Umfang des Kolbenschiebers gleichmässig verteilt wird. Jedoch ist es bei dieser Bauart unbedingt erforderlich, für den drucklosen Durchlauf genauso mindestens eine oder zwei axiale Bereiche des Kolbenschiebers und des Gehäuses vorzusehen, die getrennt von den axialen Arbeitsbereichen liegen müssen, in denen die Arbeitsströmungssteuerung stattfindet, da jeder Strömungsweg für sich den gesamten Umfangsbereich des Kolbenschiebers bzw. der Gehäusebohrung beansprucht.

Es sind ferner Steuervorrichtungen bekannt, bei denen der drucklose Durchlauf in dem gleichen axialen Bereich des Kolbenschiebers liegt, wie auch die Arbeitsströmungssteuerung, d.h. der Pumpenzulaufkanal, jedoch dazu winkelversetzt. Die einseitige Anpressung des Kolbenschiebers an die Gehäusebohrung wird bei solchen Steuerventilvorrichtungen durch zusätzliche konstruktive Massnahmen kompensiert, die zusätzliche Druckpolster am Umfang des Kolbenschiebers erzeugen, welche für einen Druckausgleich sorgen sollen. Jedoch konnten diese Vorschläge bisher zu keinem befriedigenden Druckausgleich führen, insbesondere dann, wenn diese Steuerventilvorrichtungen bei grossen Förderströmen eingesetzt werden mussten.

Der Erfindung liegt das technische Problem zugrunde, eine Steuerventilvorrichtung der eingangs genannten Art zu schaffen, bei der bereits aufgrund der Konstruktion des Kolbenschiebers und des Gehäuses von vornherein dafür gesorgt wird, dass zwischen der Neutralstellung und der Steuerstellung des Kolbenschiebers keine einseitig wirkenden Kräfte entstehen können, die der Verstellbewegung des Kolbenschiebers hinderlich sind, und zwar unabhängig von der Grösse des jeweiligen Förderstromes.

Das gestellte Problem wird erfindungsgemäss durch die im kennzeichnenden Teil des Patentanspruchs 1 angegebenen Merkmale gelöst.

Durch diese Ausbildung des Gehäuses und des Kolbenschiebers bzw. des sich aus dem Zusammenspiel dieser beiden Komponenten ergebenden Strömungsführungssystems für den drucklosen Durchlauf können von vornherein keine einseitigen Klemmkräfte für den Kolbenschieber mehr entstehen. Es werden dadurch zusätzliche konstruktive Massnahmen eingespart, die insbesondere bei grossen Durchflussströmen für einen Druckausgleich am Schieber unumgänglich wären. In jeder Stellung zwischen der Neutralstellung und der Steuerstellung bleibt der Kolbenschieber druckausgeglichen. Auch bei grossen Förderströmen wird ein vernachlässigbarer Durchflusswiderstand für den drucklosen Durchlauf erreicht, da die Strömungswege mit optimalen Querschnitten und einem günstigen Verlauf angeordnet sind. Diese Strömungswege können in bezug auf den Kolbenschieber praktisch symmetrisch sein, so dass für die Strömung zu beiden Seiten des Kolbenschiebers und von beiden Seiten des Kolbenschiebers weg praktisch die gleichen Verhältnisse vorliegen. Der Druckausgleich bleibt auch vollständig erhalten, wenn mehrere derart konzipierte Steuerventile mit einem durchgehenden drucklosen Durchlauf aneinandergesetzt werden und wenn dann ein beliebiges oder mehrere dieser Steuerventile betätigt werden. Besonders günstig ist ferner, dass mit dieser Ausbildung der drucklose Durchlauf in dem gleichen axialen Erstreckungsbereich des Gehäuses und des Kolbenschiebers liegt, wie die Druckmittelführung von dem Pumpenzulauf zur Gehäusebohrung und durch den Kolbenschieber, von dem sie dann zu jeweils einem Verbraucher gesteuert wird. Es wird trotz der Versetzung zwischen dem Druckkanal und dem Ablaufkanal und der Anordnung der Ausnehmungen kein zusätzlicher axialer Bereich im Gehäuse oder Kolbenschieber benötigt, der deren Baulänge vergrössern müsste. Der axiale Bereich, in dem sowohl der drucklose Durchlauf als auch die Druckmittelzuführung für die Arbeitsströmungssteuerung erfolgt, ist in der Praxis durch den Abstand zwischen den Verbraucheranschlüssen bestimmt. Da die Anschlussarmaturen am Gehäuse für die zu den Verbrauchern führenden Leitungen eine bestimmte Grösse haben müssen, können die Verbraucheranschlüsse nicht beliebig nahe zueinander gesetzt werden, sondern es hat der axiale Gehäuse- und Kolbenschieberbereich zwischen den Verbraucheranschlüssen stets eine Erstreckung, die zum problemlosen Unterbringen des drucklosen Durchlaufes ausreicht. Mit dieser Ausbildung ist ferner vorteilhafterweise der Effekt verbunden, dass nicht nur die vom Druckmittel aus dem Druckkanal beaufschlagten Umfangsflächenbereiche am Kolbenschieber in gleicher Grösse einander diametral gegenüberliegen, sondern dass auch die Flächenbereiche des Umfangs des Kolbenschiebers, die mit dem geringer Druck des Ablaufkanals beaufschlagt oder drucklos sind, ebenfalls an beiden Seiten des Kolbenschiebers in gleicher Grösse einander diametral gegenüberliegen. Dieser Effekt stellt sich bei jeder Zwischenstellung des Kolbenschiebers zwischen der Neutralstellung und der Steuerstellung ein, wobei die Grösse der Flächenbereiche bei der Kolbenschieberbewegung variiert; jedoch an beiden Seiten des Kolbenschiebers im gleichen Mass. Die im Kolbenschieber angeordneten Taschen, die zur Strömungsführung des drucklosen Durchlaufes bzw. zum Druckausgleich beitragen, können ohne Schwierigkeiten in einem Umfangsbereich des Kolbenschiebers liegen, wo sie sich nicht mit anderen Strömungsführungseinrichtungen, z.B. für die Arbeitsströmungssteuerung, überschneiden.

Eine zweckmässige Ausführungsform der Erfindung, bei der je ein mit dem Druck im Druckkanal bzw. dem Druck im Ablaufkanal beaufschlagter Umgehungskanal im Gehäuse die Gehäusebohrung umgeht und dem jeweiligen Kanal gegenüberliegend in die Gehäusebohrung einmündet, geht aus Anspruch 2 hervor. Im Gegensatz zu der bekannten Ausführungsform gemäss der DE-A-2 152 830, Fig. 6, wird beim drucklosen Durchlauf hier das Druckmittel nicht direkt vom Druckkanal in den Ablaufkanal und vom Druck-Verbindungskanal zum Ablauf-Verbindungskanal geleitet, woraus einseitige Kräfte für den Kolbenschieber resultierten und auch auf beiden Wegen unterschiedliche Strömungswiderstände unvermeidbar sind, wird bei dieser Ausbildung eine symmetrische Strömung auf beiden Wegen erzielt, die sich nicht nur insgesamt durch einen geringen Strömungswiderstand beim drucklosen Durchlauf auszeichnet, sondern auch von vornherein die Entstehung von Klemmkräften für den Kolbenschieber vermeidet, und zwar unabhängig davon, ob mehrere Steuerventile mit einem durchgehenden drucklosen Durchlauf aneinandergesetzt sind, die einzeln oder gemeinsam betätigt werden. Der bauliche Aufwand für diese Ausbildung ist vertretbar gering, da die Ausnehmungen mit dem gleichen Werkzeug im selben Arbeitsgang hergestellt werden, wie die Druck- bzw. Ablaufkanäle, und da zum Unterbringen der Druck- bzw. Ablaufverbindungskanäle im Gehäuse in diesem axialen Bereich genügend Platz zur Verfügung steht.

Zweckmässig ist dabei auch das Merkmal von Anspruch 3, gemäss dem der Druckmittelstrom beim drucklosen Durchlauf auf zwei im Gehäuse im wesentlichen getrennten Wegen geführt wird. Auf diese Weise lassen sich auch mit verhältnismässig kleindurchmessrigen Strömungswegen grosse Durchflussströme erreichen, denen nur ein vetretbar geringer Strömungswiderstand entgegensteht. Dies ist ja ein besonders wichtiger Aspekt, da beim drucklosen Durchlauf zur Vermeidung eines Energieverlustes und einer unzweckmässigen Erwärmung des Druckmittels das gesamte von der Druckquelle zugeführte Druckmittel möglichst verlustarm durchströmen muss.

Da bei dieser Ausbildung das Druckmittel beim drucklosen Durchlauf auf zwei voneinander getrennten Strömungswegen die Steuerventilvorrichtung durchsetzt und äussere Einflüsse die Durchflussströme und die Drücke in den beiden Strömungswegen relativ zueinander verändern können, woraus dann wieder einseitige Klemmkräfte am Kolbenschieber resultieren könnten, ist auch das Merkmal von Anspruch 4 wichtig. Über diesen Druckausgleichskanal wird dieser unter Umständen nachteilige Effekt kompensiert.

Eine weitere, vorteilhafte Ausführungsform einer erfindungsgemässen Steuerventilvorrichtung, mit wenigstens zwei je einen Kolbenschieber enthaltenden Gehäusebohrungen in einem Gehäuse, zeichnet sich durch die in Anspruch 5 hervorgehobenen Merkmale aus. Bei dieser Ausbildung wird mit den getrennten Strömungsführungssystemen beider Gehäusebohrungen sichergestellt, dass unabhängig davon, ob der eine oder der andere Kolbenschieber oder beide gleichzeitig verstellt werden, stets an beiden Kolbenschiebern ein idealer Druckausgleich herrscht.

Eine weitere, zweckmässige Ausführungsform der erfindungsgemässen Steuerventilvorrichtung, die in einem Gehäuse zwei Gehäusebohrungen mit darin untergebrachten Kolbenschiebern aufweist, geht aus Anspruch 6 hervor. Infolge dieser Anordnung der Anschlussöffnungen ist dieses Steuerventil mit anderen gleichartig ausgebildeten Steuerventilen kompatibel, wenn es erforderlich ist, einen durchgehenden drucklosen Durchlauf durch alle miteinander verbundenen Steuerventile zu erreichen.

Eine weitere, zweckmässige Ausführungsform der erfindungsgemässen Steuerventilvorrichtung mit zwei mit ihren Gehäuseseiten aneinandergesetzten Steuerventilen mit einem durchgehenden drucklosen Durchlauf, erläutert Anspruch 7. Bei dieser Ausbildung unterscheiden sich jeweils zwei zusammenpassende Gehäuse durch die Lage der Anschlussöffnungen an den Gehäuseaussenseiten. Diese Versetzung zwischen den Anschlussöffnungen resultiert daraus, dass zweckmässigerweise die jeweiligen zur Gehäusebohrung führenden Kanäle im Gehäuse möglichst kurz sein sollen und geradlinig zur Gehäusebohrung verlaufen. Deshalb sind infolge der Versetzung zwischen dem Druckkanal und dem Ablaufkanal auch die Anschlussöffnungen an beiden Gehäuseseiten relativ zueinander versetzt. Wenn darauf weniger Gewicht gelegt wird, können die Anschlussöffnungen an den beiden Gehäuseseiten eines Gehäuses auch so gesetzt sein, dass jedes Gehäuse mit einem gleichen Gehäuse kompatibel ist. Es ist allerdings dann erforderlich, den Druckkanal und den Ablaufkanal bzw. die Druck- und Ablaufverbindungskanäle im Gehäuse schräg verlaufen zu lassen oder abzuknicken. Denkbar wäre es ferner, zwischen den Gehäusen aneinanderzusetzender Steuerventile der Steuerventilvorrichtung Adapterplatten einzusetzen, in denen die Versetzung zwischen den Anschlussöffnungen ausgeglichen wird.

Eine weitere, besonders wichtige Ausführungsform der Erfindung geht aus Anspruch 8 hervor. Bei dieser alternativen Ausführungsform verläuft nurmehr ein einziger, entsprechend gross dimensionierter Druckkanal zur Gehäusebohrung und auch nur ein einziger gross dimensionierter Ablaufkanal von der Gehäusebohrung zur anderen Gehäuseseite. Die Strömungsführungssysteme, die zu dem idealen Druckausgleich des Kolbenschiebers führen, sind hier hauptsächlich im Kolbenschieber untergebracht. Es ergibt sich jedoch wiederum eine vollkommen symmetrische Strömung an beiden Seiten des Kolbenschiebers. Es werden sowohl die druckbeaufschlagten Flächenbereiche als auch die drucklosen Flächenbereiche symmetrisch an beiden Seiten des Kolbenschieberumfangs angeordnet, um in jeder Kolbenschieberstellung zwischen der Neutralstellung und der Steuerstellung den Druckausgleich garantieren zu können. Dabei ist es zweckmässig, wenn das Merkmal von Anspruch 9 vorliegt, da sich diese relativ kleinen Durchgangsbohrungen problemlos in dem Längsbereich des Kolbenschiebers unterbringen lassen, der durch den Abstand zwischen den in einer anderen Arbeitsebene liegenden Verbraucheranschlüssen zur Verfügung steht.

Da bei dieser Ausführungsform der drucklose Durchlauf der Neutralstellung des Kolbenschiebers über dem Kanal zwischen den Taschen läuft und es wichtig ist, beim drucklosen Durchlauf einen möglichst geringen Strömungswiderstand zu haben, ist das Merkmal von Anspruch 10 wichtig. Die Strömung wird hierbei nicht scharf umgelenkt.

Eine weitere, zweckmässige Ausführungsform einer Steuerventilvorrichtung mit wenigstens zwei mit ihren Gehäusen aneinandergesetzten Steuerventilen mit einem durchgehenden drucklosen Durchlauf geht schliesslich aus Anspruch 11 hervor. Da aus strömungstechnischen Gründen der Druckkanal und der Ablaufkanal gerade zur Gehäusebohrung und gerade aus der Gehäusebohrung verlaufen, werden die Gehäuse von mehreren in einer Steuerventilvorrichtung zusammenzufassenden Steuerventilen jeweils paarweise aufeinander abgestimmt, indem der Druckkanal im einen Gehäuse zur einen Seite relativ zum Ablaufkanal versetzt ist, während er im anderen dazu passenden Gehäuse zur anderen Seite versetzt ist. Mit diesem Paar aus zusammenpassenden Gehäusen können dann wahlweise weitere Paare oder auch einzelne Gehäuse kombiniert werden. Wenn es keine Rolle spielt, ob der Pumpenanschluss bzw. die Verbraucheranschlüsse bei nebeneinandergesetzten Steuerventilen in einer Steuerventilvorrichtung jeweils an den gleichen Gehäuseseiten liegen, ist es auch möglich, die Versetzung der Anschlussöffnungen an beiden Gehäuseaussenseiten dadurch auszugleichen, dass das jeweils zweite Gehäuse um 180° um die Gehäusebohrungslängsachse gedreht mit dem ersten Gehäuse verbunden wird.

Nachfolgend werden anhand der Zeichnung Ausführungsbeispiele der Erfindung erläutert. Es zeigen

Fig. 1 einen Längsschnitt durch eine erste Ausführungsform einer Steuerventilvorrichtung mit zwei aneinandergesetzten Steuerventilen in der Stellung für drucklosen Durchlauf,

Fig. 2 und 3 jeweils Querschnitte durch die Steuerventilvorrichtung von Fig. 1 in den Ebenen II-II und III-III, wobei hier jeweils vier Steuerventile mit einem durchgehenden drucklosen Durchlauf aneinandergesetzt sind,

Fig. 4 einen um 90° gedrehten Längsschnitt durch ein Steuerventil der Steuerventilvorrichtung von Fig. 1,

Fig. 5 einen Längsschnitt durch ein Steuerventil der Steuerventilvorrichtung von Fig. 1 in einer Steuerstellung,

Fig. 6 einen Längsschnitt durch eine zweite Ausführungsform einer Steuerventilvorrichtung mit zwei aneinandergesetzten Steuerventilen in der Stellung für drucklosen Durchlauf,

Fig. 7 einen Querschnitt durch die Steuerventilvorrichtung von Fig. 6 in der Ebene VII-VII, und

Fig. 8 einen Längsschnitt durch ein Steuerventil der Steuerventilvorrichtung von Fig. 6 in einer Zwischenstellung zwischen der Neutralstellung und einer Steuerstellung.

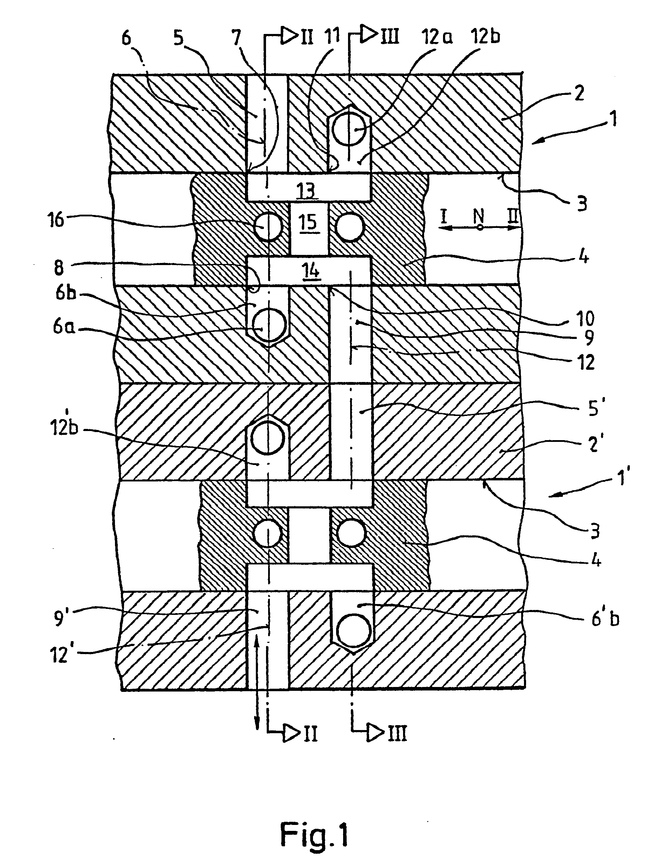

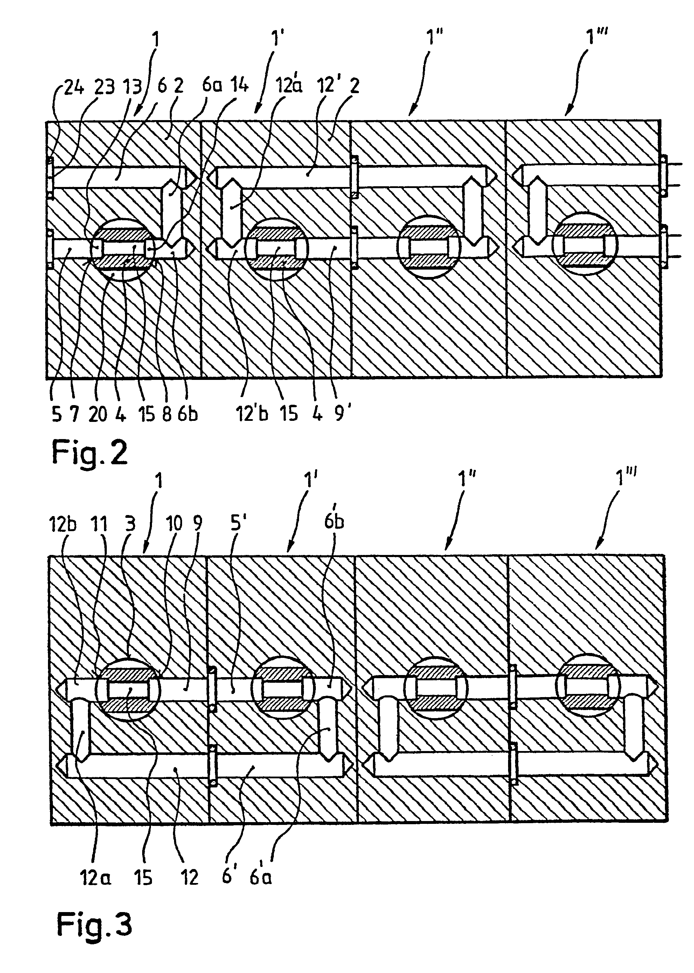

In einer Steuerventilvorrichtung gemäss den Fig. 1 bis 5 sind — obwohl ein einzelnes Steuerventil 1 auch für sich allein einsetzbar ist — mehrere Steuerventile 1, 1' und in den Fig. 2 und 3 auch Steuerventile 1'' und 1''' mit den Aussenseiten ihrer Gehäuse 2, 2' so aneinandergesetzt, dass eine durchgehende Strömungsverbindung zwischen ihnen entsteht. Die einzelnen Steuerventile können voneinander unabhängig oder auch gleichzeitig betätigt werden.

Das Steuerventil 1 von Fig. 1, das in seiner Ebene des drucklosen Durchlaufes geschnitten dargestellt ist, besitzt im Gehäuse 2 eine Gehäusebohrung 3, in der ein Kolbenschieber 4 zwischen einer Neutralstellung N und einer ersten und zweiten Steuerstellung I, II verschiebbar geführt ist. Zur Gehäusebohrung führt von der Gehäuseaussenseite ein gerade verlaufender Druckkanal 5 zur Gehäusebohrung 3, dessen Mündung mit 7 bezeichnet ist. In Längsrichtung der Gehäusebohrung 3, gegenüber der Mündung 7 versetzt, liegt eine Mündung 10 eines von der Gehäusebohrung 3 zur anderen Gehäuseseite führenden Ablaufkanals 9.

Wie Fig. 2 zeigt, ist im Gehäuse 2 oberhalb des Druckkanals 5 ein Umgehungskanal der Gehäusebohrung 3 vorgesehen, der an derselben Gehäuseseite beginnt, wie der Druckkanal 5 und aus einem Druck-Verbindungskanal 6, 6a und einer Ausnehmung 6b besteht, die in der Gehäusebohrung 3 der Mündung 7 diametral mit ihrer Mündung 8 gegenüberliegt. Die Ausnehmung 6b ist zur Gehäusebohrung 3 hin offen.

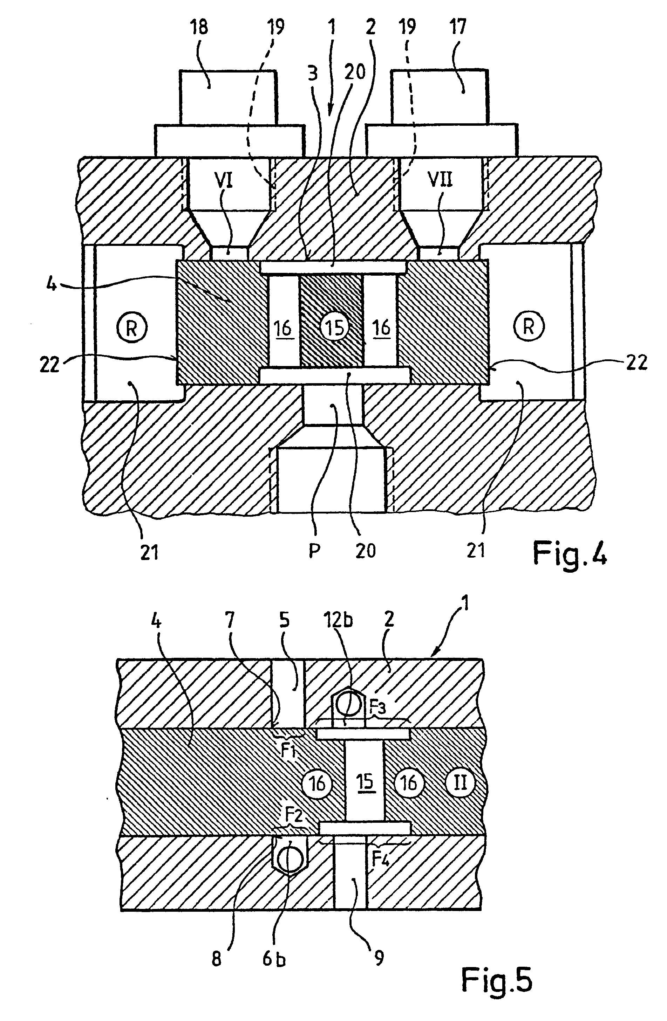

Fig. 3 zeigt, wie in der zur Schnittebene II-II axial versetzten Schnittebene III-III unterhalb des Ablaufkanals 9 ein Umgehungskanal um die Gehäusebohrung 3 herumgeführt ist, der aus einem Ablauf-Verbindungskanal 12, 12a und einer Ausnehmung 12b besteht, deren Mündung 11 der Mündung 11 diametral gegenüberliegt. Die Mündung 11 ist gleich gross wie die Mündung 10. Die Ausnehmung 12b ist zur Gehäusebohrung 3 hin offen. Der Abstand zwischen den Mündungen 7 und 11 wird von einer im Kolbenschieber ausgebildeten Tasche 13 überbrückt, während der Abstand zwischen der Mündung 8 und der Mündung 10 von einer Tasche 14 überbrückt wird. Die Taschen 13 und 14 stehen über einen Druckausgleichskanal 15 im Kolbenschieber 4 in Verbindung. Senkrecht zur in Fig. 1 dargestellten Ebene des drucklosen Durchlaufes durchsetzen den Kolbenschieber 4 beiderseits des Druckausgleichskanals 15 Kanäle 16, deren Funktion anhand von Fig. 4 später erläutert werden wird.

An den beiden einander gegenüberliegenden Gehäuseaussenseiten liegen somit die Anschlussöffnungen 23 (Fig. 2) zueinander im gleichen Mass versetzt, wie auch der Druckkanal 5 gegenüber dem Ablaufkanal 9. Zur Abdichtung jeder Anschlussöffnung 23 ist in der Gehäuseaussenseite ein Dichtring 24 eingesetzt.

Das in der Fig. 1 untere Gehäuse 2' des Steuerventils 1' enthält den Druckkanal 5' und den Ablaufkanal 9' mit umgekehrter Versetzung, so dass die beiden Gehäuse 2, 2' zur Herstellung einer stufenlosen Strömungsverbindung aneinandersetzbar sind. In Fig. 1 wird oben, falls die Steuerventilvorrichtung mehrere Steuerventile aufweisen sollte, wieder ein Gehäuse 2' angesetzt, während unten an das Gehäuse 2' wieder ein Gehäuse 2 angesetzt werden kann.

In Fig. 4 ist das Steuerventil 1 von Fig. 1 im Schnitt durch seine Arbeitsebene schematisch gezeigt. Die Arbeitsebene liegt — in bezug auf die Gehäusebohrungslängsachse — um 90° versetzt zur Ebene des drucklosen Durchlaufes. Zur Gehäusebohrung 3 führt in der Arbeitsebene ein Pumpenanschluss P, dem in der Gehäusebohrung gegenüber und seitlich jeweils versetzt Verbraucheranschlüsse V1 und V2 liegen, von denen Gewindebohrungen 19 zur Gehäuseaussenseite führen. In die Gewindebohrungen 19 sind Anschlussarmaturen 17, 18 eingeschraubt, die zum Anschliessen von Verbraucherleitungen dienen. Infolge der axialen Grösse der Anschlussarmaturen 17, 18 ist zwischen den Verbraucheranschlüssen V1 und V2 ein bestimmter axialer Abstand notwendig, der zur Unterbringung der Strömungsführungssysteme für den drucklosen Durchlauf (Fig. 1) nutzbar ist, damit die Gehäuse-Kolbenschieberlänge nicht unzweckmässig gross gewählt werden muss.

In der Arbeitsebene sind im Kolbenschieber 4 diametral gegenüberliegend und in Längsrichtung verlaufende Strömungstaschen 20 ausgebildet, die über die Kanäle 16 miteinander verbunden sind. Senkrecht zu den Kanälen 16 verläuft der Druckausgleichskanal 15 zwischen den Taschen 13, 14 für den drucklosen Durchlauf. Die Enden der Gehäusebohrung 3 bilden Rücklaufkammern 21, die über Rücklaufanschlüsse R mit dem Rücklaufsystem des Steuerventils verbunden sind. Die Rücklaufanschlüsse R können auch zu dem Ablaufkanal 9 bzw. dem Ablaufverbindungskanal 12, 12a oder der Ausnehmung 12b führen. Die mit 22 bezeichneten Stirnenden des Kolbenschiebers 4 sind hier zur Arbeitsströmungssteuerung eingesetzt, d.h., dass in jeweils einer Steuerstellung des Kolbenschiebers ein Verbraucheranschluss V1 oder V2 mit einer Rücklaufkammer 21 verbunden wird, während der jeweils andere Verbraucheranschluss V1 oder V2 über die Strömungstaschen 20 und die Kanäle 16 mit dem Pumpenzulauf P verbunden ist.

In Fig. 1 sind beide Steuerventile 1 und 1' in der Neutralstellung mit drucklosem Durchlauf gezeigt. Das von der Druckquelle kommende Druckmittel steht auch im Pumpenzulauf P an; es kann aber zu keinem Verbraucheranschluss V1 oder V2 gelangen, da diese vom Kolbenschieber abgesperrt sind. Das Druckmittel strömt demzufolge durch den Druckkanal 5 und gleichzeitig auch den Druck-Verbindungskanal 6, 6a in die Ausnehmung 6b. Das durch die Mündung 7 in die Tasche 13 eintretende Druckmittel wird umgelenkt und gelangt in die Ausnehmung 12b und von dieser in den Ablauf-Verbindungskanal 12a und damit zur anderen Gehäuseseite. Gleichzeitig strömt das Druckmittel aus der Ausnehmung 6b über die Tasche 14 in den Ablaufkanal 9 und von diesem zur Gehäuseaussenseite. Ein etwaiges Druckungleichgewicht zwischen den Taschen 13 und 14 wird über den Druckausgleichskanal 15 ausgeglichen. Die vom Druckmittel beaufschlagten Oberflächenbereiche des Kolbenschiebers 4 sind an beiden Seiten gleich gross, so dass dieser Druck ausgeglichen ist.

Wenn nun der Kolbenschieber 4 (s. Fig. 5) in seine zweite Steuerstellung II verschoben wird, werden die Mündungen 7 und 8 allmählich blendenartig geschlossen, so dass immer weniger Druckmittel zur Ausnehmung 12b bzw. in den Ablaufkanal 9 gelangt. Der Druck steigt zunehmend an. Trotzdem bleibt der Kolbenschieber druckausgeglichen, da der ansteigende Druck an den sich diametral gegenüberliegenden, gleich grossen Flächenbereichen des Kolbenschieberumfangs wirkt. Auch der im Ablaufkanal 9 und in der Ausnehmung 12b herrschende, geringe Druck wirkt auf einander diametral gegenüberliegende, gleich grosse Flächenbereiche ein. Beim Verfahren des Kolbenschiebers 4 überfährt das Ende der Tasche 20 allmählich den Verbraucheranschluss V2, so dass das mit ansteigendem Druck im Pumpenzulauf P anstehende Druckmittel allmählich zu dem dort angeschlossenen Verbraucheranschluss strömt. In gleichem Masse gibt das linke Stirnende 22 des Kolbenschiebers 4 den Verbraucheranschluss V1 frei, so dass Druckmittel von dort in die Rücklaufkammer 21 und von dieser in den Rück-laufanschluss R abströmen kann. In der Steuerstellung II (Fig. 5) steht der Arbeitsdruck aus dem Druckkanal 5 und dem Druck-Verbindungskanal 6, 6b im Bereich der Mündungen 7, 8 auf Flächenbereichen F1 und F2 des Kolbenschieberumfangs an. Da die Flächenbereiche gleich gross sind, entsteht keine einseitige Verklemmung des Kolbenschiebers. Im gleichen Mass sind Flächenbereiche F3 und F4 über die Ausnehmung 12b und den Ablaufkanal 9 druckentlastet, so dass auch hier kein Kräfteungleichgewicht entstehen kann. Weder der Stellbewegung des Kolbenschiebers in diese Steuerstellung noch einer späteren Rückführung des Kolbenschiebers in die Neutralstellung steht eine Verklemmung des Kolbenschiebers entgegen.

Das Gleiche gilt für das für das Steuerventil 1' in Fig. 1 und auch die weiteren Steuerventile 1'' und 1''' der Fig. 2 und 3.

Bei der weiteren Ausführungsform gemäss den Fig. 6, 7 und 8 besteht die Steuerventilvorrichtung aus zwei Steuerventilen 30, 30', deren Gehäuse 31, 31' aneinandergesetzt sind. Das Gehäuse 31 besitzt eine Gehäusebohrung 32, in der ein Kolbenschieber 33 längsverschieblich zwischen einer Neutralstellung und zwei Steuerstellungen I und II geführt wird. Zur Gehäusebohrung 32 führt ein Druckkanal 34, während aus der Gehäusebohrung 32 gegenüber dem Druckkanal 34 in Bohrungslängsrichtung versetzt ein Ablaufkanal 35 zur anderen Gehäuseseite führt. Dem Druckkanal 34 in der Gehäusebohrung gegenüberliegend ist eine Aussparung 36 angeordnet, die zur Gehäusebohrung 32 hin offen ist, während dem Ablaufkanal 35 diametral gegenüberliegend eine Ausnehmung 37 zugeordnet ist, die ebenfalls zur Gehäusebohrung 32 hin offen ist. Die Mündungsgrösse des Druck- und Ablaufkanals 34, 35 und der Ausnehmungen 36, 37 ist jeweils gleich.

Der Kolbenschieber 33 weist einander diametral gegenüberliegende, längsverlaufende Taschen 41, 42 auf, die die Versetzung zwischen jeweils dem Druckkanal 34 und der benachbarten Ausnehmung 37 bzw. dem Ablaufkanal 35 und der benachbarten Ausnehmung 36 überbrücken, und zwar in der gezeigten Stellung für drucklosen Durchlauf. Die Taschen 41 und 42 sind über einen schrägen Verbindungskanal 38 in Strömungsverbindung, wobei die Schräge des Verbindungskanals 38 der Versetzung zwischen dem Druckkanal 34 und dem Ablaufkanal 35 entspricht, damit für den drucklosen Durchlauf ein weitgehend kontinuierlicher Strömungsverlauf gegeben ist. In einem Abstand vor und hinter den Taschen sind in der Ebene des drucklosen Durchlaufs Durchgangsbohrungen 39, 40 im Kolbenschieber 33 ausgebildet, wobei die Durchgangsbohrung 39 in der zweiten Steuerstellung II den Druckkanal 34 mit der Ausnehmung 36 verbindet, während in der ersten Steuerstellung die Durchgangsbohrung 40 den Ablaufkanal 35 mit der Ausnehmung 37 verbindet. Zwischen den Durchgangsbohrungen 39 und 40 und dem Verbindungskanal 38 verlaufen die Kanäle 16 für die Arbeitsströmungssteuerung.

Das Steuerventil 30' ist entweder gleich ausgebildet, wie das Steuerventil 30, wobei es um die Bohrungslängsachse um 180° gedreht angeordnet ist, so dass der Pumpenzulauf zu diesem Steuerventil entgegengesetzt zum Pumpenzulauf beim Steuerventil 30 liegt, oder es ist sein Gehäuse so ausgebildet, dass die Versetzung zwischen dem Druckkanal 34' und dem Ablaufkanal 35' umgekehrt gewählt ist, wie beim Steuerventil 30. Entsprechend ist auch die Schräge des Verbindungskanals 38 umgekehrt gelegt.

In der in Fig. 6 gezeigten Stellung für drucklosen Durchlauf gelangt das Druckmittel durch den Druckkanal 34 in die Tasche 41 (und auch in die Ausnehmung 37) und durch den Verbindungskanal 38 in die Tasche 42, aus der es sowohl in die Ausnehmung 36 als auch in den Ablaufkanal 35 strömt. Die an beiden Seiten des Kolbenschiebers mit dem geringen Druck beim drucklosen Durchlauf beaufschlagten Flächenbereiche sind gleich gross. In den Durchgangsbohrungen 39 und 40 herrscht kein nennenswerter Druck.

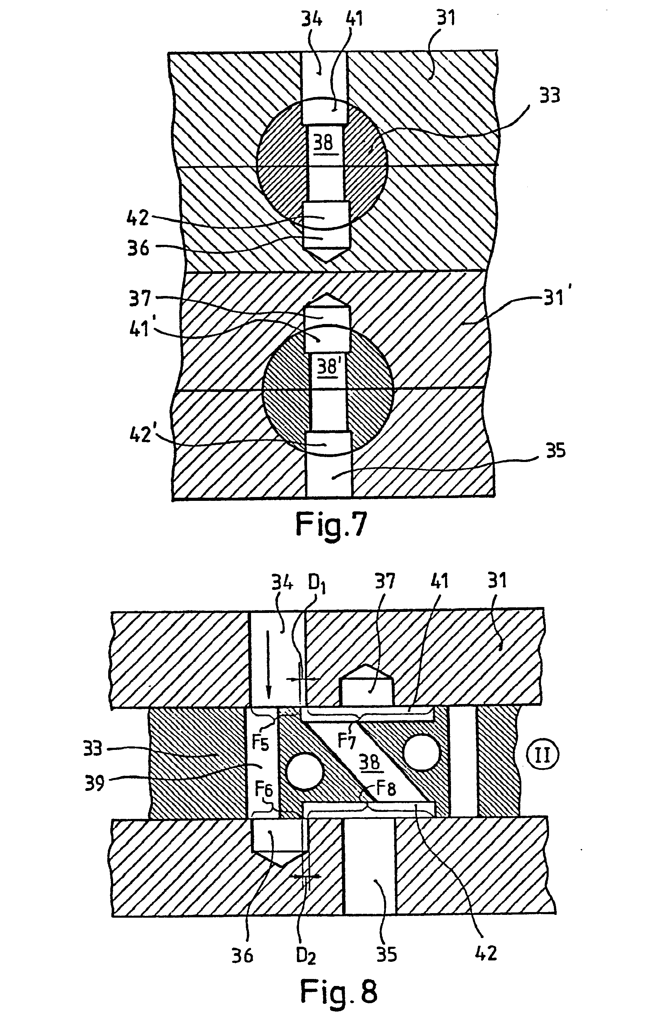

Wenn nun der Kolbenschieber 33 aus der in Fig. 6 gezeigten Neutralstellung in Richtung auf seine zweite Steuerstellung II verschoben wird (Fig. 8), verengt sich der Durchgangsquerschnitt vom Druckkanal 34 in die Tasche 41 allmählich, so dass eine Drosselstelle D1 entsteht, während in gleichem Mass auch der Durchtrittsquerschnitt von der Ausnehmung 36 in die Tasche 42 kleiner wird und eine Drosselstelle D2 bildet, die gleich gross ist, wie die Drosselstelle D1. Der Druck im Druckkanal 34 steigt allmählich an. Die Durchgangsbohrung 39 stellt eine Strömungsverbindung vom Druckkanal 34 zur Ausnehmung 36 her, so dass in beiden Drosselstellen D1 und D2 jeweils das gleiche Druckgefälle herrscht und auch die Flächen F5 und F6, in denen sich der Druck auf der Oberfläche des Kolbenschiebers auswirkt, gleich gross sind. Aber auch die Flächen F6 und F7 sind einander gleich gross, in denen der Druck im Ablaufkanal 35 herrscht, da der Verbindungskanal 38 diesen geringen Druck auch in der Tasche 41 wirken lässt. Sobald der Kolbenschieber die Steuerstellung II erreicht hat, haben die Taschen 41, 42 sowohl die Mündung des Druckkanals 34 als auch die Ausnehmung 36 verlassen, so dass aus dem Druckkanal 34 kein Druckmittel mehr in den Ablaufkanal strömen kann. Über die Durchgangsbohrung 39 sind jedoch weiterhin die vom Druck im Druckkanal beaufschlagten Flächenbereiche am Kolbenschieberumfang einander diametral gegenüberliegend gleich gross. Das Gleiche gilt für die Flächenbereiche, in denen der geringe Druck im Ablaufkanal herrscht. Somit ist auch hier der Kolbenschieberdruck ausgeglichen.

Bei einer Bewegung des Kolbenschiebers aus der Neutralstellung in die andere Steuerstellung I sorgen der Verbindungskanal 38 und die Durchgangsbohrung 40 wiederum für eine gleichmässige Verteilung der an beiden Umfangsseiten des Kolbenschiebers wirkenden Drücke auf einander gleich grosse Flächenbereiche.

## Patentansprüche

1. Steuerventilvorrichtung mit wenigstens einem Steuerventil (1), insbesondere für Hochdruck-Hydrauliksysteme mit grossen Durchflussströmen, mit einem Gehäuse (2), in dem in wenigstens einer Gehäusebohrung (3) ein Kolbenschieber (4) aus einer Neutralstellung mit drucklosem Durchlauf zur Arbeitsströmungssteuerung in wenigstens eine Steuerstellung verschiebbar ist, in der er den drucklosen Durchlauf sperrt, mit wenigstens einem Druckkanal (5) zur und wenigstens einem Ablaufkanal (9) aus der Gehäusebohrung (3), die über im Kolbenschieber (4) vorgesehene Strömungskanäle (13, 14, 15) miteinander verbindbar sind, dadurch gekennzeichnet, dass der Ablaufkanal (9, 12, 35) in die Gehäusebohrung (3, 32) gegenüber dem Druckkanal (5, 6, 34) in Bohrungslängsrichtung versetzt einmündet, dass der Druckkanal- und der Ablaufkanalmündung (7, 10) in der Gehäusebohrung jeweils eine zur Gehäusebohrung (3) offene Ausnehmung (6b, 12b; 36, 37) mit gleicher Grösse diametral gegenüberliegt, dass jede Ausnehmung (6b, 12b; 36, 37) jeweils mit dem im gegenüberliegenden Kanal (5, 6; 34; 9, 12; 35) herrschenden Druck über wenigstens einen entweder im Gehäuse (2, 31) oder im Kolbenschieber (4, 33) angeordneten Druck- bzw. Ablauf-Verbindungskanal (6a, 6; 12a, 12; 38, 39, 40) beaufschlagt ist, und dass im Kolbenschieber jeweils vor einer Kanalmündung (7, 10) eine längsverlaufende und in der Neutralstellung die Längsversetzung zwischen der jeweiligen Kanalmündung (7, 10) und der jeweils benachbarten Ausnehmung (6b, 12b; 36, 37) überbrückende Tasche (13, 14; 41, 42) ausgebildet ist.

2. Steuerventilvorrichtung nach Anspruch 1, wobei je ein mit dem Druck im Druckkanal (5) bzw. dem Druck im Ablaufkanal (9) beaufschlagter Umgehungskanal (6, 12) die Gehäusebohrung (3) innerhalb des Gehäuses (2) umgeht und dem jeweiligen Kanal (5, 9) gegenüberliegend in die Gehäusebohrung (3) einmündet, dadurch gekennzeichnet, dass jeder Umgehungskanal in eine Ausnehmung (6b, 12b) führt und für diese Ausnehmung den Druck- bzw. den Ablaufverbindungskanal (6, 6a; 12, 12a) bildet, über den die Ausnehmung mit dem Druck im jeweils diametral gegenüberliegend mündenden Kanal (5; 9) beaufschlagt wird, und dass in der Neutralstellung des Kolbenschiebers jede Tasche (13, 14) einen Kanal (5, 9) mit der in Längsrichtung benachbarten Ausnehmung (6b, 12b) und über diese mit dem Druck- bzw. Ablaufverbindungskanal (12, 12a; 6, 6a); verbindet, derart, dass Druckmittel aus dem direkt zur Gehäusebohrung (3) geführten Druckkanal (5) in den Ablaufverbindungskanal (12, 12a) und Druckmittel aus dem Druck-Verbindungskanal (6, 6a) in den direkt von der Gehäusebohrung (3) wegführenden Ablaufkanal (9) strömt.

3. Steuerventilvorrichtung nach den Ansprüchen 1 und 2, dadurch gekennzeichnet, dass der Druck- und der Ablaufverbindungskanal (6, 6a; 12, 12a) eine an jeweils einer Gehäuseaussenseite liegende, vom jeweils zugeordneten Druck- bzw. Ablaufkanal (5, 9) getrennte Anschlussöffnung (23) besitzt.

4. Steuervorrichtung nach den Ansprüchen 1 bis 3, dadurch gekennzeichnet, dass die Taschen (13, 14) im Kolbenschieber (4) durch einen Druckausgleichskanal (15) verbunden sind.

5. Steuerventilvorrichtung nach wenigstens einem der Ansprüche 1 bis 4, mit wenigstens zwei je einen Kolbenschieber enthaltenden Gehäusebohrungen in einem gemeinsamen Gehäuse, dadurch gekennzeichnet, dass für jede Gehäusebohrung ein Strömungsführungssystem aus Druck- und Ablaufkanal mit zugeordneten Druck- und Ablaufverbindungskanälen und Ausnehmungen vorgesehen ist, und dass das Strömungsführungssystem der in Strömungsrichtung vorderen Gehäusebohrung mit dem Strömungsführungssystem der in Strömungsrichtung hinteren Gehäusebohrung derart verbunden ist, dass der Ablaufkanal aus der vorderen Gehäusebohrung zum Druckkanal der hinteren Gehäusebohrung und der Ablauf-Verbindungskanal der in Strömungsrichtung vorderen Gehäusebohrung zum Druckverbindungskanal der hinteren Gehäusebohrung führt.

6. Steuerventilvorrichtung nach Anspruch 5, mit zwei Gehäusebohrungen in einem gemeinsamen Gehäuse, dadurch gekennzeichnet, dass die Anschlussöffnungen zum Druck- und Druckverbindungskanal des Strömungsführungssystems der in Strömungsrichtung vorderen Gehäusebohrung an einer Gehäuseseite mit den Anschlussöffnungen des Ablauf- und Ablaufverbindungskanals des Strömungsführungssystems der hinteren Gehäusebohrung an der anderen Gehäuseseite fluchten.

7. Steuerventilvorrichtung nach wenigstens einem der Ansprüche 1 bis 4, mit zwei mit ihren Gehäuseseiten aneinandergesetzten Steuerventilen (1, 1') mit einem durchgehenden drucklosen Durchlauf in der Neutralstellung der beiden Kolbenschieber, dadurch gekennzeichnet, dass in jedem Gehäuse (2, 2′, 2′′, 2′′′) die Anschlussöffnungen (23) des Druck- und des Druckverbindungskanals (5; 6, 6a; 5′, 6′, 6′a) an der einen Gehäuseseite in Bohrungslängsrichtung gegenüber den Anschlussöffnungen des Ablauf- und des Ablaufverbindungskanals (9; 12, 12a; 9′; 12′, 12′a) an der anderen Gehäuseseite derart zueinander versetzt sind, dass die Gehäuse (2, 2′, 2′′, 2′′′) jeweils paarweise zusammensetzbar und mit jeweils einem weiteren gleichen Gehäuse oder gleichen Gehäusepaaren unter Beibehalten eines durchgehenden drucklosen Durchlaufes kombinierbar sind.

8. Steuerventilvorrichtung nach Anspruch 1, dadurch gekennzeichnet, dass — in Kolbenschieberlängsrichtung gesehen — in einem Abstand vor und hinter den Taschen (41, 42) je eine Durchgangsbohrung (39, 40) den Kolbenschieber (33) durchsetzt, dass die Taschen (41, 42) durch wenigstens einen Kanal (38) im Kolbenschieber miteinander verbunden sind, und dass die Durchgangsbohrungen (39, 40) zusammen mit dem Kanal (38) die drucküberttragenden Verbindungskanäle zu den Ausnehmungen (36, 37) bilden.

9. Steuerventilvorrichtung nach Anspruch 8, dadurch gekennzeichnet, dass jede Durchgangsbohrung (39, 40) annähernd halb so gross ist, wie der Kanal (38).

10. Steuerventilvorrichtung nach den Ansprüchen 8 und 9, dadurch gekennzeichnet, dass der Kanal (38) zwischen den Taschen (41, 42) schräg in der Richtung angeordnet ist, in der die Druckkanal-(34)Mündung gegenüber der Ablaufkanal-(35)Mündung versetzt liegt.

11. Steuerventilvorrichtung nach den Ansprüchen 1 und 8 bis 10, mit wenigstens zwei mit ihren Gehäuseaussenseiten aneinandergesetzten Steuerventilen mit einem durchgehenden drucklosen Durchlauf, dadurch gekennzeichnet, dass die Anschlussöffnungen des Druckkanals (34, 34′) und des Ablaufkanals (35, 35′) bei jedem Gehäuse (31, 31′) zueinander spiegelbildlich und in Längsrichtung der Gehäusebohrung versetzt sind, derart, dass die Gehäuse (31, 31′) jeweils paarweise zueinander passen und mit weiteren gleichen Gehäusen oder Gehäusepaaren wahlweise kombinierbar sind.

## Claims

1. A control valve apparatus having at least one control valve (1), particularly for high-pressure hydraulic systems with high through-flow rates, comprising a housing (2) having at least one housing bore (3) in which a valve piston (4) is displaceable from a neutral position permitting zero-pressure flow-through to at least one control position for controlling the flow of an operating medium, in which position it interrupts the zero-pressure flow-through, at least one pressure channel (5) leading to, and at least one drain channel (9) leading from said housing bore (3) and adapted to communicate with one another through flow channels (13, 14, 15) provided in said valve piston (4), characterized in that said drain channel (9, 12, 35) opens into said housing bore (3, 32) at a longitudinally offset position with respect to said pressure channel (5, 6, 34), that respective recesses (6b, 12b; 36, 37) of equal size opening towards said housing bore (3) are disposed diametrally opposite the openings (7, 10) of said pressure channel and said drain channel, respectively, in said housing bore, that each recess (6b, 12b; 36, 37) is supplied with the pressure prevailing in the respective opposite channel (5, 6; 34; 9, 12; 35) through at least one pressure or drain connection channel, respectively (6a, 6; 12a, 12; 38, 39, 40) provided in said housing (2, 31) or in said valve piston (4, 33), and that opposite each channel opening (7, 10) said valve piston is formed with a longitudinally extending pocket (13, 14; 41, 42) adapted in the neutral position to bridge the longitudinal offset between the respecvtive channel opening (7, 10) and the respective adjacent recess (6b, 12b; 36, 37).

2. A control valve apparatus according to claim 1, wherein respective bypass channels (6, 12) supplied with the pressure prevailing in said pressure channel (5) and with the pressure prevailing in said drain channel (9), respectively, circumvent said housing bore (3) within said housing (2) to open into said housing bore (3) at positions opposite the respective channel (5, 9), characterized in that each bypass channel leads into one of said recesses (6b, 12b) and forms the pressure or drain connection channel, respectively (6, 6a; 12, 12a) for the respective recess, through which the latter is supplied with the pressure prevailing in the respective diametrally oppositely opening channel (5; 9), and that in the neutral position of said valve piston each pocket (13, 14) connects one channel (5; 9) to the longitudinally adjacent recess (6b; 12b), and through the latter to the pressure or drain connection channel, respectively (12, 12a; 6, 6a), so that pressure medium flows from the pressure channel (5) directly leading into said housing bore (3) into said drain connection channel (12, 12a), and pressure medium flows from said pressure connection channel (6, 6a) into said drain channel (9) leading directly away from said housing bore (3).

3. A control valve apparatus according to claim 1 and 2, characterized in that said pressure connection channel and said drain connection channel (6, 6a; 12, 12a) have a connector opening (23) provided at an outer surface of said housing separate from the respective pressure or drain channel (5; 9).

4. A control valve apparatus according to claims 1 to 3, characterized in that said pockets (13, 14) in said valve piston (4) are interconnected by a pressure equalization channel (15).

5. A control valve apparatus according to at least one of claims 1 to 4, comprising at least two housing bores each containing a valve piston within in a common housing, characterized in that for each housing bore there is provided a flow path system comprising pressure and drain channels with the associated pressure and drain connection channel and recess, and that the flow path system of the upstream housing bore is connected to the flow path system of the downstream housing bore in such a manner that the drain channel of the upstream housing bore leads to the pressure channel of the downstream housing bore, and the drain connection channel of the upstream housing bore leads to the pressure connection channel of the downstream housing bore.

6. A control valve apparatus according to claim 5, having two housing bores in a common housing, characterized in that the connector openings of the pressure channel and the pressure connection channel of the flow path system of the upstream housing bore are disposed on one side of the housing in alignment with the connector openings of the drain channel and drain connection channel of the flow path system of the downstream housing bore on the other side of the housing.

7. A control valve apparatus according to at least one of claims 1 to 4, comprising two control valves (1, 1′) disposed with their housing sides in mutual abutment for zero-pressure flow through both valves in the neutral positions of the two valve pistons, characterized in that in each housing (2, 2′, 2′′, 2′′′) the connector openings (23) of the pressure channel and the pressure connection channel (5; 6a; 5′, 6′, 6′a) at the one housing side are disposed at an offset position in the longitudinal direction of the bore with respect to the connector openings of the drain channel and the drain connection channel (9; 12, 12a; 9′; 12′, 12′a) at the other housing side, so that said housings (2, 2′, 2′′, 2′′′) are adapted to be assembled as a pair and to be combined with a further similar housing or similar housing pair so as to maintain zero-pressure flow-through characteristics.

8. A control valve apparatus according to claim 1, characterized in that at a distance in front and to the rear of said pockets (41, 42) as seen in the longitudinal direction of the valve piston, said valve piston (33) is formed with a respective through-bore (39, 40), in that said pockets (41, 42) are interconnected by at least one channel (38) in said valve piston, and that said through-bores (39, 40) cooperate with said channel (38) to form said pressure-transmitting connection channels to said recesses (36, 37).

9. A control valve apparatus according to claim 8, characterized in that each through-bore is approximately half the size of said channel (38).

10. A control valve apparatus according to claim 8 and 9, characterized in that said channel (38) is disposed between said pockets (41, 42) at an inclined direction corresponding to the offset of the pressure channel (34) opening with respect to the drain channel (35) opening.

11. A control valve apparatus according to claims 1 and 8 to 10, comprising at least two control valves disposed with their outer housing sides in mutual abutment for zero-pressure flow-through, characterized in that on each housing (31, 31′) the connector openings of the pressure channel (34, 34′) and of the drain channel (35, 35′) are disposed mirror-imagewise at offset positions in the longitudinal direction of the housing bore, so that said housings (31, 31′) fit one another as a pair and are adapted to be selectively combined with further similar housing or similar housing pairs.

## Revendications

1. Dispositif distributeur comprenant au moins un distributeur (1), en particulier pour systèmes hydrauliques à haute pression présentant des débits importants, un corps de distributeur (2) à l'intérieur duquel dans au moins un alésage (3) un tiroir de distribution (4) peut être amené, en coulissant, à partir d'une position de repos à circulation sans pression, en vue de la commande d'un écoulement de travail, dans au moins une position de travail où il bloque la circulation exempte de pression, au moins un canal sous pression (5) conduisant à l'alésage (3) du corps et au moins un canal de sortie (9) conduisant hors de cet alésage, lesquels canaux peuvent être mis en communication entre eux par l'intermédiaire de canaux d'écoulement (13, 14, 15) prévus à l'intérieur du tiroir de distribution (4), caractérisé en ce que le canal de sortie (9, 12, 35) débouche dans l'alésage (3, 32) du corps de manière décalée, par rapport au canal sous pression (5, 6, 34), dans la direction longitudinale de l'alésage, en ce qu'à l'embouchure (7) du canal sous pression et à l'embouchure (10) du canal de sortie dans l'alésage du corps est diamétralement opposé respectivement un évidement (6b, 12b; 36, 37) de même dimension ouvert en direction de l'alésage (3) du corps, en ce que chaque évidement (6b, 12b; 36, 37) est soumis respectivement à la pression régnant dans le canal opposé (5, 6; 34; 9, 12; 35) par l'intermédiaire respectivement d'au moins un canal de communication côté pression ou un canal de communiaction côté sortie (6a, 6; 12a, 12; 38, 39, 40) ménagé soit dans le corps (2, 31), soit dans le tiroir de distribution (4, 33) et en ce que dans le tiroir de distribution est formée chaque fois devant une embouchure de canal (7, 10) une poche (13, 14; 41, 42) s'étendant longitudinalement et franchissant dans la position de repos le décalage longitudinal entre l'embouchure (7, 10) du canal respectif et l'évidement avoisinant concerné (6b, 12b; 36, 37).

2. Dispositif distributeur selon la revendication 1, dans lequel deux canaux de contournement (6, 12), l'un soumis à la pression régnant dans le canal sous pression (5) et l'autre à la pression régnant dans le canal de sortie (9), contournent l'alésage (3) à l'intérieur du corps (2) et débouchent dans l'alésage (3) en regard du canal respectif (5, 9), caractérisé en ce que chaque canal de contournement conduit à un évidement (6b, 12b) et forme pour cet évidement respectivement le canal de communication côté pression ou côté sortie (6, 6a; 12, 12a) par l'intermédiaire duquel l'évidement est soumis à la pression régnant dans le canal (5; 9) dont l'embouchure lui est diamétralement opposé et en ce que dans la position de repos du tiroir de distribution chaque poche (13, 14) met un canal (5, 9) en communication avec l'évidement (12b, 6b) l'avoisinant dans la direction longitudinale et, par l'intermédiaire de celui-ci, avec respectivement le canal de communication côté sortie ou côté pression (12, 12a; 6, 6a), de telle sorte que du fluide sous pression s'écoule à partir du canal sous pression (5) s'étendant directement vers l'alésage (3) du corps dans le canal de communication côté sortie (12, 12a) et que du fluide sous pression sortant du canal de communication côté pression (6, 6a) s'écoule dans le canal de sortie (9) qui éloigne le fluide directement de l'alésage (3) du corps.

3. Dispositif distributeur selon la revendication 1 ou 2, caractérisé en ce que le canal de communication côté pression et le canal de communication côté sortie (6, 6a; 12, 12a) présentent chacun un orifice de raccordement (23) situé chacun sur un côté extérieur du corps et séparé respectivement du canal sous pression ou du canal de sortie correspondant (5, 9).

4. Dispositif distributeur selon l'une quelconque des revendications précédentes, caractérisé en ce que les poches (13, 14) communiquent entre elles dans le tiroir de distribution (4) par un canal d'égalisation de pression (15).

5. Dispositif distributeur selon au moins l'une quelconque des revendications précédentes, présentant dans un corps de distributeur commun au moins deux alésages contenant chacun un tiroir de distribution, caractérisé en ce que pour chaque alésage du corps est prévu un système de guidage d'écoulement constitué par un canal sous pression et un canal de sortie avec des canaux de communication côté pression et côté sortie et des évidements correspondants et en ce que le système de guidage d'écoulement de l'alésage antérieur dans le sens d'écoulement est en communication avec le système de guidage d'écoulement de l'alésage postérieur dans le sens d'écoulement de telle sorte que le canal de sortie de l'alésage antérieur donne accès au canal sous pression de l'alésage postérieur et que le canal de communication côté sortie de l'alésage antérieur dans le sens d'écoulement donne accès au canal de communication côté pression de l'alésage postérieur.

6. Dispositif distributeur selon la revendication 5, présentant deux alésages dans un corps de distributeur commun, caractérisé en ce que les orifices de raccordement au canal sous pression et au canal de communication côté pression du système de guidage d'écoulement de l'alésage antérieur dans le sens découlement sont alignés d'un côté du corp sur les orifices de raccordement du canal de sortie et du canal de communication côté sortie du système de guidage d'écoulement de l'alésage postérieur de l'autre côté du corps.

7. Dispositif distributeur selon au moins l'une quelconques des revendications 1 à 4, comprenant deux distributeurs (1, 1') qui sont montés l'un contre l'autre avec les côtés de leurs corps et qui présentent une circulation continue sans pression dans la position de repos des deux tiroirs de distribution, caractérisé en ce que dans chaque corps (2, 2' 2'', 2''') les orifices de raccordement (23) du canal sous pression et du canal de communication côté pression (5; 6, 6a; 5', 6', 6' a) d'un côté du corps sont décalés dans la direction longitudinale de l'alésage par rapport aux orifices de raccordement du canal de sortie et du canal de communication côté sortie (9; 12, 12a; 9'; 12', 12' a) de l'autre côté du corps, de telle manière que les corps de distributeur (2, 2', 2'', 2''') peuvent chaque fois être assemblés par paire et être combinés chaque fois avec un autre corps identique ou des paires de corps identiques, tout en conservant une circulation continue exempte de pression.

8. Dispositif distributeur selon la revendication 1, caractérisé en ce que, pour un observateur regardant dans la direction longitudinale du tiroir de distribution, à une certaine distance devant et derrière les poches (41, 42) un trou passant (39, 40) trasverse le tiroir de distribution (33), en ce que les poches (41, 42) communiquent entre elles par au moins un canal (38) prévu dans le tiroir de distribution et en ce que les trous passants (39, 40) forment conjointement avec le canal (38) les canaux de communication qui transmettent la pression aux évidements (36, 37).

9. Dispositif distributeur selon la revendication 8, caractérisé en ce que chaque trou passant (39, 40) est approximativement moitié moins grand que le canal (38).

10. Dispositif distributeur selon la revendication 8 ou 9, caractérisé en ce que le canal (38) s'étendant entre les poches (41, 42) est disposé obliquement dans la direction suivant laquelle l'embouchure du canal sous pression (34) est décalée par rapport à l'émbouchure du canal de sortie (35).

11. Dispositif distributeur selon l'une quelconque des revendications 1 et 8 à 10, comprenant au moins deux distributeurs montés l'un contre l'autre avec les côtés extérieurs de leur corps et présentant une circulation continue sans pression, caractérisé en ce que les orifices de raccordement du canal sous pression (34, 34') et du canal de sortie (35, 35') pour chaque corps (31, 31') sont disposés l'un par rapporte à l'autre comme leur image dans un miroir et décalés entre eux dans la direction longitudinale de l'alésage du corps, de telle manière que les corps (31, 31') s'adaptent l'un à l'autre par paire et peuvent être combinés à volonté avec d'autres corps ou paires de corps identiques.

Fig.1

Fig.2

Fig.3

0 123 837

Fig.4

Fig.5

15

Fig. 6

0 123 837

Fig.7

Fig. 8

19